# FASCICULE DE BREVET EUROPEEN

(11) **EP 1 078 810 B1**
(45) Date de publication et mention de la délivrance du brevet: **29.09.2004**
(21) Numéro de dépôt: 00402204.2
(22) Date de dépôt: 02.08.2000
(51) Int. Cl.: B60N 2/30, B60N 2/36, B60N 2/48

(54) **Siège pliant pour véhicule automobile**
Folding seat for automotive vehicle
Faltbarer Sitz für Kraftfahrzeug

(30) Priorité: 24.08.1999 FR 9910717
(43) Date de publication de la demande: 28.02.2001
(73) Titulaire: Peugeot Citroen Automobiles SA, 92200 Neuilly sur Seine (FR)
(72) Inventeur: Pomer, Yves, 95870 Bezons (FR)
(74) Mandataire: Robert, Jean-François

(56) Documents cités:
- EP-A- 0 030 924
- EP-A- 0 151 426
- WO-A-94/01302
- WO-A-99/19165
- GB-A- 2 318 285

## Description

La présente invention concerne un siège pliant pour véhicule automobile. L'invention concerne plus particulièrement un siège muni d'une assise se déplaçant verticalement et horizontalement lorsque le dossier est rabattu sur cette assise, afin d'aménager une surface de chargement à la place du siège, par exemple en continuité avec le plancher de coffre.

Un siège pliant selon le préambule de la revendication 1 est décrit dans le document EP 151426. Ce document décrit notamment un siège arrière de véhicule automobile, pourvu d'un dossier articulé sur un plancher et d'une assise articulée avec ce dossier et avec le plancher. Des moyens de liaison sont disposés entre l'assise et le dossier de façon que le rabattement du dossier s'accompagne d'une translation de l'assise vers le plancher. Une plate-forme de chargement est ainsi aménagée à la place du siège.

Comme l'articulation du dossier est de préférence située au-dessus du niveau de l'assise, pour permettre un rabattement convenable du dossier sur cette assise, le siège décrit dans le document EP 151426 a pour inconvénient de nécessiter un support spécifique surélevé pour cette articulation et/ou une forme particulière réhaussée du plancher au niveau de cette articulation.

Par ailleurs, le document EP 151426 montre que le dossier et l'assise sont tous deux fixés directement sur le plancher. Ces deux éléments étant mobiles l'un par rapport à l'autre, leur mise en position sur le plancher peut s'avérer particulièrement délicate lors de la fixation du siège.

Le but de la présente invention est de pallier les inconvénients précédents, en proposant un siège pliant qui peut être monté facilement sur un véhicule, notamment un véhicule pourvu d'un plancher plat.

A cet effet, la présente invention concerne un siège pliant pour véhicule automobile, comprenant une assise reliée à un plancher, un dossier articulé au moyen d'une liaison pivot située à la base du dossier et permettant de rabattre ce dernier sur l'assise, le dossier étant relié à l'assise par des moyens de liaison conformés pour induire, lors du rabattement du dossier, un déplacement de l'assise vers le bas et vers l'avant, caractérisé en ce que le siège comprend un châssis d'assise fixé sur le plancher, ce châssis comportant d'une part, une première portion sensiblement parallèle à l'assise, sur laquelle ladite assise est articulée, et d'autre part, une seconde portion sensiblement perpendiculaire à la première portion, fixée sur une extrémité de cette première portion et orientée vers le haut, de façon que le châssis présente une forme générale en L, le dossier étant articulé au moyen de la liaison pivot sur une extrémité supérieure de la seconde portion.

Le siège pliant suivant l'invention peut également comporter une ou plusieurs des caractéristiques suivantes :
- la seconde portion du châssis a une longueur au moins égale au quart de la longueur du dossier la seconde portion du châssis a une longueur au moins égale au quart de la longueur du dossier,
- la première portion du châssis comporte au moins deux longerons sensiblement parallèles et situés de chaque côté du siège, chacun de ces longerons supportant l'assise au moyen d'au moins deux biellettes, dont une biellette avant est reliée au châssis par une articulation et à l'assise par une articulation et dont une biellette arrière est reliée au châssis par une articulation et à l'assise par une articulation,
- les moyens de liaison reliant le dossier à l'assise comportent, sur au moins un côté du siège, un levier dont l'une des extrémités est reliée à la base du dossier par une articulation et une autre extrémité est reliée à la biellette arrière par une articulation,
- pour chaque côté du siège disposant d'un levier, l'articulation de la biellette arrière avec le châssis est située entre d'une part, l'articulation de la biellette arrière avec le levier, et d'autre part, l'articulation de la biellette arrière avec l'assise,
- l'articulation du levier avec le dossier est située sur une extrémité inférieure de la base du dossier, de sorte que cette articulation est disposée à proximité et sensiblement en dessous de la liaison pivot reliant le dossier et le châssis, lorsque le dossier est en position relevée,
- l'assise comporte deux barres sensiblement longitudinales, situées respectivement à proximité des deux longerons du châssis, de sorte que ces barres encadrent le châssis lorsque l'assise est en position basse,
- au moins deux cales de maintien latéral sont montées pivotantes, selon la direction longitudinale du siège, respectivement sur chaque barre de l'assise, ces cales comportant chacune une palette coopérant en butée avec les longerons du châssis, de façon à amener les cales en position inactive sensiblement dans le plan de l'assise, lorsque cette assise est en position basse, et de façon à les rétablir en position active de façon sensiblement inclinée ou verticale, lorsque l'assise est en position haute, sous l'action d'au moins un ressort interposé entre les cales et les barres correspondantes,
- le dossier comporte un appui-tête formant une liaison glissière avec le dossier selon une direction sensiblement verticale lorsque le dossier est relevé, cet appui-tête étant apte à se disposer automatiquement dans une position active déployée lorsque le dossier est relevé, et dans une position inactive rétractée lorsque le dossier est rabattu sur l'assise,
- l'appui-tête est relié à un tirant monté mobile en translation sur le dossier, selon une direction sensiblement verticale lorsque le dossier est relevé, le tirant coopérant avec une came fixée sur le châssis à proximité de la liaison pivot.
- la came est constituée d'une platine fixée sur le châssis perpendiculairement à l'axe de la liaison pivot, laquelle platine comporte un trou oblong ayant une forme générale courbée entourant partiellement la liaison pivot, de sorte que la distance entre le trou oblong et la liaison pivot varie progressivement d'une extrémité à l'autre de ce trou,
- le trou oblong de la came s'étend depuis le dessous de la liaison pivot vers l'arrière de cette liaison pivot, de sorte que la distance séparant le trou oblong de la liaison pivot est la plus grande en dessous de la liaison pivot et la plus faible derrière la liaison pivot,
- le tirant est pourvu à une extrémité inférieure, d'un doigt orienté parallèlement à la liaison pivot, ce doigt étant enfilé dans le trou oblong de sorte qu'il peut se déplacer dans le trou oblong et peut pivoter en rotation autour de son axe par rapport audit trou,
- un levier est fixé sur le dossier au moyen d'une liaison pivot selon une direction perpendiculaire au plan du dossier, ce levier étant relié à l'une de ses extrémités à l'appui-tête, et étant relié à une autre extrémité au tirant par une biellette, la liaison pivot étant située entre les deux extrémités du levier,
- le levier comporte à son extrémité reliée à l'appui-tête, un trou oblong traversé par un doigt solidaire de l'appui-tête, lequel trou oblong permet un mouvement de translation et/ou de rotation entre le levier et le doigt,
- la biellette est reliée au levier par une articulation et au tirant par une articulation.

L'invention sera mieux comprise à l'aide de la description ci-après qui en donne un exemple non limitatif de réalisation pratique et qui est illustrée par les dessins joints dans lesquels :
- la figure 1 représente une vue en perspective d'un siège pliant selon l'invention, le dossier étant en position relevée,
- la figure 2 représente une vue de côté du siège de la figure 1, le dossier étant dans une position intermédiaire entre la position relevée et la position rabattue,
- la figure 3 représente une vue de côté du siège de la figure 1, le dossier étant en position rabattue,
- la figure 4 représente une vue en perspective d'une partie d'un siège selon l'invention, en variante du siège représenté sur les figures 1, 2 et 3 ; ce siège est muni de cales de maintien latéral,
- la figure 5 représente une vue en perspective d'un siège selon l'invention, en variante du siège représenté sur les figures 1, 2, 3 et 4, le dossier étant en position relevée ; ce siège est muni d'un d'appui-tête,
- la figure 6 représente une vue en perspective du siège de la figure 5, le dossier étant en position rabattue.

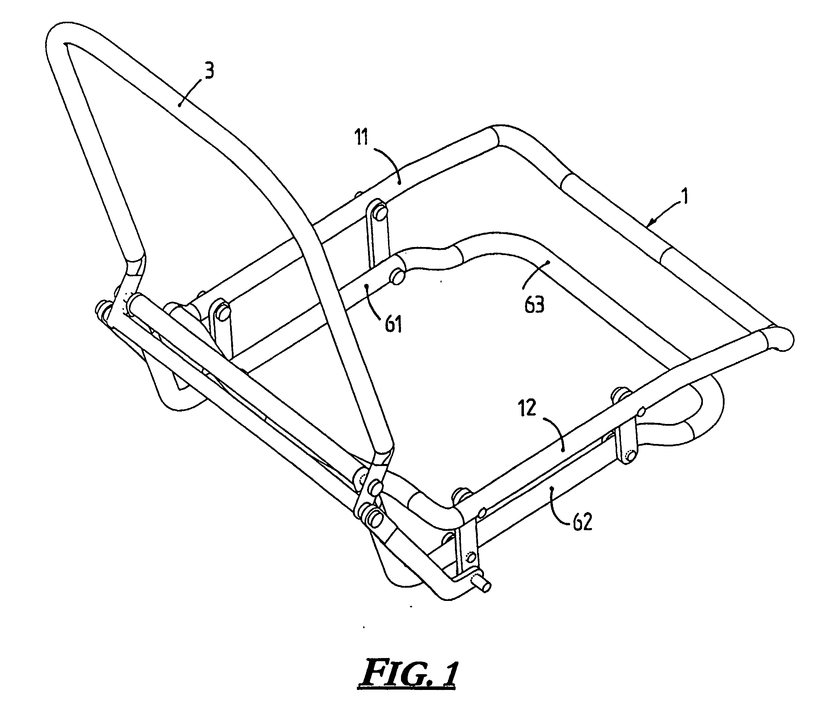

On a représenté à la figure 1, un siège pliant destiné à être monté sur un véhicule automobile. Les matelassures de l'assise et du dossier ne sont pas représentées pour des raisons de clarté du dessin ; seuls l'armature et les éléments d'articulation du siège sont donc représentés.

Les éléments constitutifs de ce siège sont supportés par un châssis 6 d'assise. Ce châssis 6 constitue un socle unique, non déformable, qui est destiné à faciliter le montage du siège sur un plancher 2 du véhicule automobile.

Ce siège peut avantageusement être utilisé comme siège d'appoint et n'exige pas de forme spécifique du plancher 2 destiné à le supporter. En effet, ce plancher peut avoir une forme sensiblement plane.

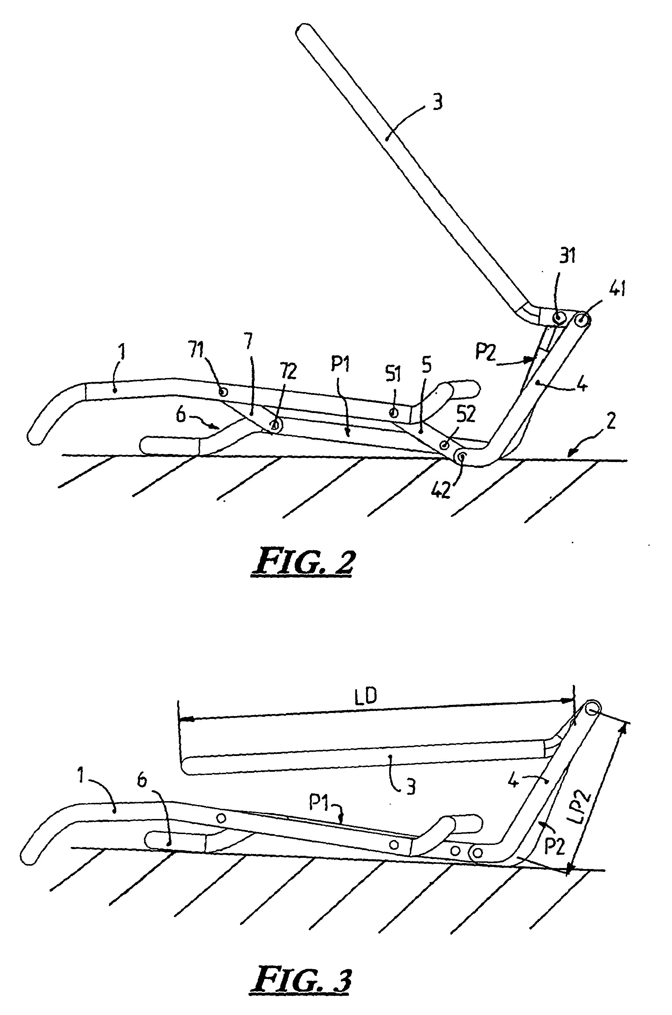

Comme le montrent les figures 2 et 3, le dossier 3 de ce siège peut être rabattu sur l'assise 1, de façon que l'espace occupé par le siège peut être utilisé comme espace de chargement. Lorsque le dossier 3 est rabattu, la surface de chargement mise en place est de préférence disposée dans la continuité du plancher de coffre. Cette surface peut être par exemple le dos du dossier 3 lorsque ce dernier est rabattu sur l'assise 1.

Afin que l'encombrement vertical du siège en position rabattu soit minimal, l'inclinaison du dossier 3 sur l'assise 1 implique un déplacement vers le bas et vers l'avant de l'assise 1, ce qui permet au dossier 3 de se rapprocher au maximum du plancher 2.

Le châssis 6 d'assise sur lequel sont montés le dossier 3 et l'assise 1 a une forme générale en L vu de côté, comme représenté sur la figure 2.

Ce châssis 6 comporte une première portion P1 sensiblement parallèle à l'assise 1. Généralement, la disposition du siège dans le véhicule implique que cette première portion P1 est orientée selon la direction longitudinale du véhicule. Cette portion P1 comprend deux longerons 61 ; 62, sensiblement parallèles et longitudinaux, situés de chaque côté du siège. Ces longerons sont reliés en en leur partie avant par un élément d'armature 63. Cet élément d'armature est perpendiculaire aux longerons 61 ; 62. Ces longerons et l'élément d'armature les reliant constituent différents tubes liés en eux, ces tubes ayant des formes alternant des tronçons droits et des tronçons cintrés.

D'autre part, les longerons 61 ; 62 sont maintenus solidaires du plancher 2 par des moyens de fixation. Chaque longeron est, par exemple, traversé par deux vis (non représentées) disposées transversalement, et venant se visser dans le plancher 2. Selon un autre mode de réalisation, les vis peuvent être situées au niveau des éléments d'armature reliant les longerons.

Les longerons 61 ; 62 de la première portion P1 supportent chacun l'assise 1 au moyen de deux biellettes, dont une biellette avant 7 et une biellette arrière 5.

La biellette avant 7 est reliée au châssis 6 par une articulation 72 et à l'assise 1 par une articulation 71. La biellette arrière 5 est reliée au châssis 6 par une articulation 52 et à l'assise 1 par une articulation 51. On peut noter que ces articulations sont réalisées par des liaisons pivot selon des axes transversaux par rapport au siège.

Le châssis 6 comporte également une seconde portion P2 sensiblement perpendiculaire à la première portion P1. Cette seconde portion P2 est fixée sur une extrémité arrière de la première portion P1 et est orientée vers le haut. La première portion P1 et la seconde portion P2 peuvent être réalisée à partir d'un même élément, par exemple tubulaire, courbé sensiblement à angle droit, à la jonction des deux portions.

Le dossier 3 est articulé à sa base sur l'extrémité supérieure de la seconde portion P2, au moyen d'une liaison pivot 31.

De préférence, la seconde portion P2 a une longueur LP2 égale à environ la moitié de la longueur LD du dossier 3. Cette caractéristique permet de limiter la longueur LD du dossier 3 au minimum utile à l'utilisation du dossier 3 en position relevée. Ceci permet de limiter l'encombrement du dossier 3 dans la direction longitudinale, lors de son rabattement sur l'assise 1. De plus, le dossier 3 peut aisément se disposer de façon parallèle à l'assise 1, sans que l'épaisseur des matelassures de siège ne soit une gêne excessive. On comprendra que d'une façon générale, la seconde portion P2 peut avoir une longueur LP2 au moins égale au quart de la longueur LD du dossier 3.

Les déplacements du dossier 3 et de l'assise 1 sont rendus dépendant l'un de l'autre par des moyens de liaison 4 ; 5 disposés entre le dossier et l'assise. Ces moyens de liaison sont constitués de la biellette arrière 5 et d'un levier 4 reliant une extrémité inférieure de la biellette arrière 5 à une extrémité inférieure du dossier 3. Ce levier 4 a une forme générale oblongue, légèrement recourbée en partie basse, à proximité de la liaison avec la biellette arrière 5.

Le levier 4 est relié à la biellette 5 par une articulation 42 et au dossier 3 par une articulation 41. Afin que la biellette arrière 5 soit utilisée comme bras de levier, ses articulations sont disposées de façon que l'articulation 52 entre la biellette arrière 5 et le châssis 6 est située entre d'une part, l'articulation 51 entre la biellette arrière 5 et l'assise 1, et d'autre part, l'articulation 42 entre la biellette arrière 5 et le levier 4.

Notons également que ces articulations sont réalisées au moyen de liaisons pivots selon des axes transversaux par rapport au siège.

Précisons que l'articulation reliant le levier 4 au dossier 3 est située à proximité de la liaison pivot 31 entre le dossier 3 et le châssis 6, et sensiblement en dessous de cette liaison pivot 31, lorsque le dossier 3 se trouve en position relevée. De cette façon, le dossier 3 constitue en lui-même un bras de levier. Cette caractéristique présente l'avantage de démultiplier l'effort à appliquer sur une partie supérieure du dossier 3, pour rabattre ce dernier au-dessus de l'assise 1.

Dans le mode de réalisation décrit, le siège présente un plan de symétrie par rapport à un plan vertical longitudinal le traversant en son milieu. C'est à dire que les deux côtés du siège sont pourvus de moyens de liaison entre le dossier 3 et l'assise 1, ces moyens comprenant un tirant 4 et une biellette arrière 5.

De préférence, le châssis 6 ainsi que les armatures du dossier 3 et de l'assise 1 sont réalisés en matériau métallique. Les biellettes 5 et 7 ainsi que le tirant 4 sont également réalisés en matériau métallique.

En variante, un autre siège pliant selon l'invention comporte les caractéristiques concernant l'assise 1 et le dossier 3 qui sont décrites ci-après.

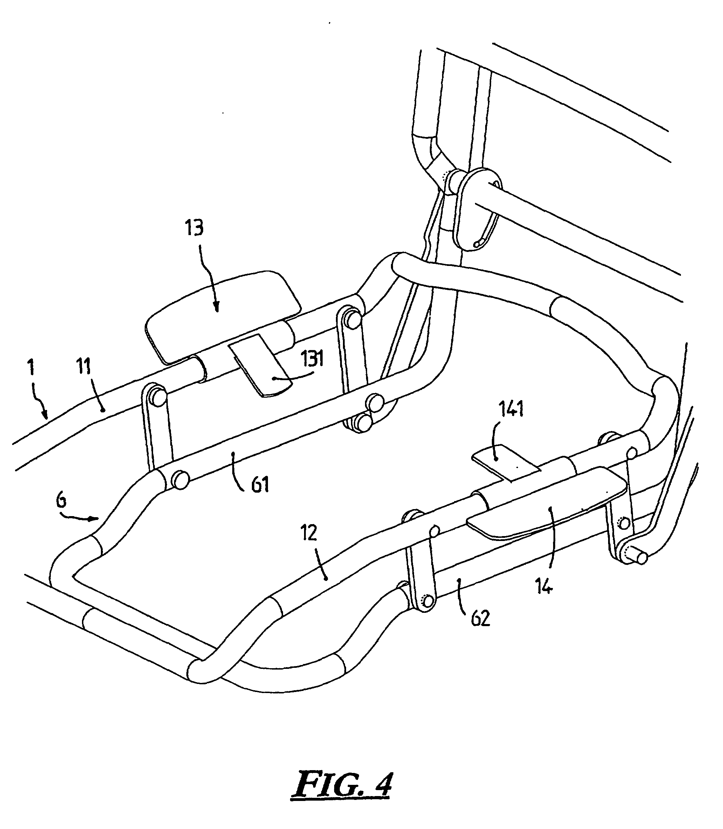

Comme le montre la figure 4, l'assise 1 comporte deux barres 11 ; 12 sensiblement longitudinales et situées respectivement à proximité des deux longerons 61 ; 62 du châssis. Ces barres 11 ; 12 sont reliées en parties avant et arrière par des éléments d'armature. Ces éléments d'armatures sont perpendiculaires aux barres 11 ; 12. Les barres 11; 12 et les éléments d'armature les reliant constituent différents tubes liés en eux, ces tubes ayant des formes alternant des tronçons droits et des tronçons cintrés.

L'écartement des barres 11 ; 12 et la forme des éléments d'armature les reliant sont tels que ces barres 11 ; 12 encadrent les longerons 61 ; 62 lorsque l'assise 1 est en position basse, c'est à dire lorsque le dossier 3 est rabattu. Il est à noter que lorsque l'assise 1 est en position basse, les biellettes avant 7 et arrière 5 viennent s'intercaler entre les longerons 61 ; 62 du châssis 6 et les barres 11 ; 12 correspondantes de l'assise 1.

Les deux barres 11 ; 12 de l'assise 1 supportent respectivement deux cales 13 ; 14 de maintien latéral. Ces cales 13 ; 14 sont montées pivotantes sur les barres 11 ; 12, selon la direction longitudinale. Les deux cales 13 ; 14 sont respectivement pourvues de deux palettes 131; 141 venant coopérer en butée avec les longerons 61 ; 62 du châssis lorsque l'assise est mise en position basse. De cette façon, ces cales 13 ; 14 se mettent en position inactive, sensiblement dans le plan de l'assise 1, ce qui minimise leur encombrement vertical, lorsque le dossier 3 est rabattu sur l'assise 1.

En revanche, lorsque le dossier 3 est relevé et que l'assise 1 se trouve en position haute, les cales 13 ; 14 sont rétablies en position active, de façon sensiblement inclinée ou verticale, au moyen d'un ressort de rappel (non représenté) situé entre les cales 13 ; 14 et les barres 11; 12. Ce ressort peut être un ressort de torsion intégré au niveau de la liaison pivot entre les cales et les barres correspondantes.

Les cales 13 ; 14 ainsi que les palettes 131 ; 141 sont de préférence réalisées en matériau métallique.

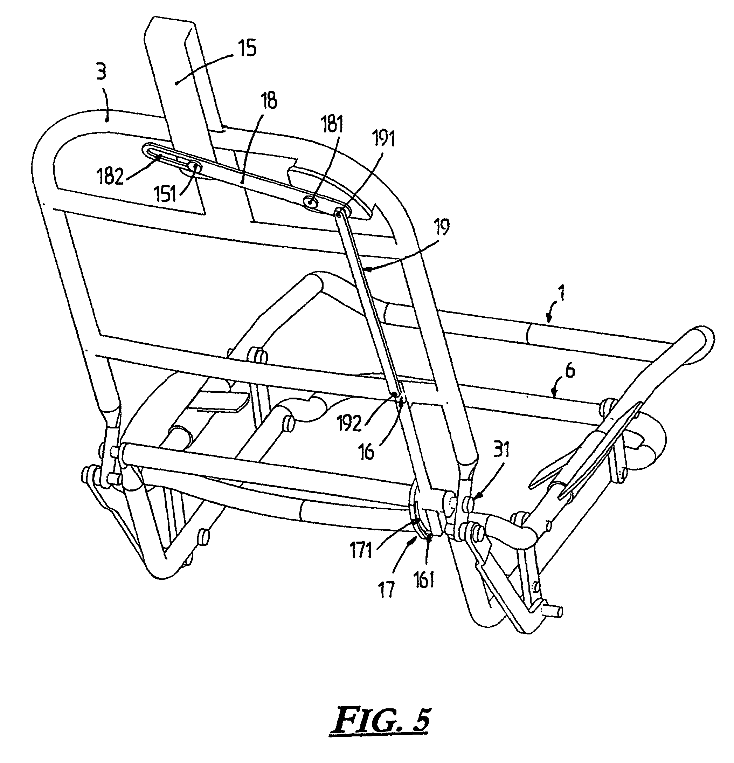

En variante également, le dossier 3 est pourvu d'un appui-tête 15, comme représenté sur la figure 5. Le terme « appui-tête » s'entend ici au sens large, c'est à dire qu'il désigne non seulement la matelassure de l'appui-tête, mais aussi son armature et ses éléments en contact avec le dossier 3. Cet appui-tête 15 est fixé sur le dossier 3 par une liaison glissière selon une direction sensiblement verticale, lorsque le dossier 3 est en position relevée. Selon l'invention, l'appui-tête 15 se dispose automatiquement en position active déployée lorsque le dossier 3 est relevé et se présente en position inactive rétractée lorsque le dossier 3 est rabattu.

La position active déployée de l'appui-tête 15 désigne la position d'utilisation « principale » de l'appui-tête 15 par un occupant du siège, c'est à dire qu'elle permet effectivement d'appuyer la tête.

La position inactive rétractée de l'appui-tête 15 désigne la position escamotée de l'appui-tête 15, pour limiter l'encombrement du siège. Dans cette position, l'appui-tête 15 est introduit dans un espace (non représenté) formé sur le bord supérieur du dossier 3 et délimité par la matelassure du dossier 3.

Pour ce faire, l'appui-tête 15 est relié à un tirant 16 monté mobile en translation sur le dossier 3. Ce tirant 16 a une forme générale oblongue, orientée de façon sensiblement parallèle au plan du dossier 3 et de façon perpendiculaire à l'axe de la liaison pivot 31 entre le dossier 3 et le châssis 6. Le tirant 16 est monté sur le dossier 3 à proximité de la liaison pivot 31 articulant le dossier 3 sur le châssis 6, et se trouve situé au voisinage de l'un des côtés du siège.

Le tirant 16 comporte à son extrémité inférieure un doigt 161 parallèle à l'axe de la liaison pivot 31 entre le dossier 3 et le châssis 6.

A proximité du tirant 16, une came 17 est montée sur le châssis 6 et entoure partiellement la liaison pivot 31. Cette came 17 est constituée d'une platine fixée sur le châssis 6 perpendiculairement à l'axe de la liaison pivot 31, donc perpendiculairement au doigt 161 du tirant 16. La platine 17 comporte un trou oblong 171 destiné à être traversé par le doigt 161 du tirant 16. Le trou oblong 171 a une forme générale courbée qui entoure la liaison pivot 31, depuis le dessous de la liaison pivot 31 jusque vers l'arrière de cette liaison pivot 31. Pour faire office de came, la distance entre le trou 171 et l'axe de la liaison pivot 31 varie progressivement d'une extrémité à l'autre de ce trou 171. Cette distance est la plus grande en dessous de la liaison pivot 31 et est la plus courte à l'arrière de la liaison pivot 171.

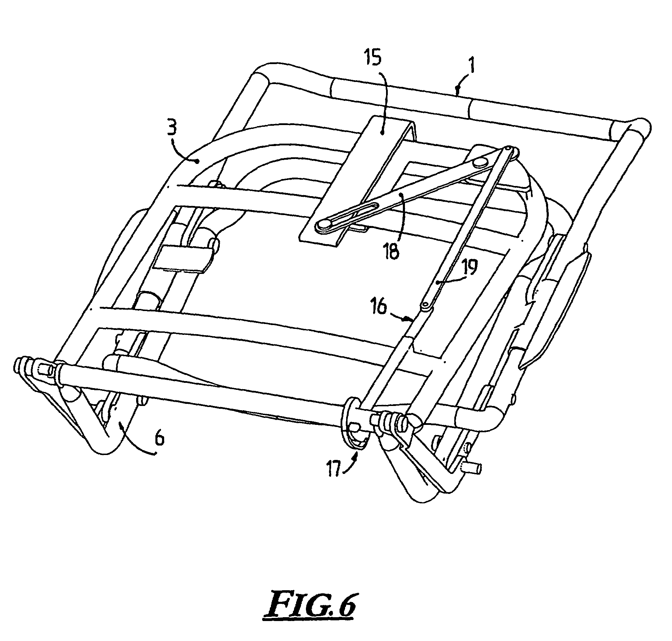

Lorsque le dossier 3 est rabattu sur l'assise 1, comme le montre la figure 6, le tirant 16 qui reste dans le plan du dossier 3, est donc incliné par rapport au châssis 6 et donc par rapport à la came 17. Dans le même temps, le doigt 161 du tirant 16 parcourt le trou oblong 171 depuis le dessous de la liaison pivot 31 vers l'arrière de la liaison pivot 31. La distance entre le doigt 171 et l'axe de la liaison pivot 31 varie donc en fonction de la forme du trou 171, ce qui provoque un déplacement du tirant 16 vers le haut lorsque le dossier 3 est rabattu. Inversement, lorsque le dossier 3 est relevé, le déplacement du tirant 16 s'effectue vers le bas.

Le déplacement de l'appui-tête 15 entre la position active déployée et la position inactive rétractée est assurée par des moyens reliant une extrémité inférieure de l'appui-tête 15 à une extrémité supérieure du tirant 16.

L'un de ces moyens est un levier 18 fixé sur le dossier 3 au moyen d'une liaison pivot 181 perpendiculaire au plan du dossier 3.

La liaison pivot 181 est située au voisinage de l'un des côtés du siège, celui près duquel se trouve le tirant 16.

Le levier 18 est relié à l'une de ses extrémités à l'appui-tête 15 et à une autre de ses extrémités au tirant 16 par une biellette 19. Il est à noter que la liaison pivot 181 est située entre les deux extrémités du levier 18.

Le levier 18 comporte à son extrémité reliée à l'appui-tête 15, un trou oblong 182. Ce trou 182 est traversé par un doigt 151 solidaire de l'appui-tête 15. Le trou oblong 182 et le doigt 151 sont conformés pour permettre un déplacement du levier 18 par rapport au doigt 151, et donc par rapport à l'appui-tête 15. Ce déplacement est une translation selon la direction longitudinale du levier 18, combinée avec une rotation par rapport à l'axe du doigt 151. Cette liaison entre l'appui-tête 15 et le levier 18 doit permettre un débattement angulaire du levier 18 autour de la liaison pivot 181, lorsque le tirant 16 exerce un effort sur le levier 18 par l'intermédiaire de la biellette 19.

La biellette 19 est reliée au levier 18 par une articulation 191 et au tirant 16 par une articulation 192. Ces deux articulations 191 ; 192 sont des liaisons pivots selon une direction perpendiculaire au plan du dossier 3. Nous pouvons également noter que la biellette 19 est sensiblement orientée de la même façon que le tirant 16, étant donné le faible déplacement latéral de l'articulation 191.

Le tirant 16, la came 17, le levier 18 et la biellette 19 sont de préférence réalisés en matériau métallique.

Bien que l'invention ait été décrite en liaison avec un mode de réalisation particulier, elle comprend tous les équivalents techniques des moyens décrits.

Les longerons 61 ; 62 du châssis 6, les barres 11 ; 12 de l'assise 1 ainsi que les éléments d'armature reliant les longerons entre eux et les barres entre elles peuvent être des profilés ayant une forme autre que tubulaire. Par exemple, la section de ces éléments peut être en forme de L ou de T.

Dans le mode de réalisation décrit, les longerons 61 ; 62 du châssis 6 sont reliés en leur partie avant par un élément d'armature transversal. En variante, on comprendra que ces longerons peuvent être reliés en d'autres points, par exemple en leur milieu ou à l'arrière, et éventuellement par plusieurs éléments d'armature.

Par ailleurs, l'assise 1 peut être articulée non pas sur les longerons 61 ; 62, mais sur un ou plusieurs éléments d'armature transversaux reliant ces longerons.

L'assise 1 peut également être supportée par 2 ou 3 biellettes ou encore par un nombre de biellette supérieur à quatre.

D'autre part, le siège peut être pourvu d'un seul levier 4, disposé sur un côté du siège, pour relier le dossier 3 à l'assise 1. Dans ce cas, les biellettes arrière disposées de chaque côté du siège peuvent avoir des formes sensiblement différentes l'une de l'autre.

On comprendra également que les moyens permettant de déployer et de rétracter l'appui-tête 15, c'est à dire le tirant 16, la came 17, le levier 18 et la biellette 19, peuvent être montés en double sur le siège, à proximité de ses deux côtés et de façon symétrique.

Certains éléments décrits, par exemple la biellette 19 ou encore le tirant 16, peuvent être réalisés en matériau de type plastique, dans la mesure où leur dimensionnement et les efforts en jeu le permettent. Dans ce cas, des inserts en forme de douille peuvent être disposés au niveau des articulations de ces éléments pour résister aux frottements et/ou aux efforts. Ces inserts peuvent être en métal ou tout autre matériau.

Dans l'exemple de réalisation décrit, la came 17 est montée sur le châssis 6. Selon un autre mode de réalisation, la came 17 peut également être montée sur le plancher 2 ou encore sur un élément adjacent au plancher 2. Par exemple, la came 17 peut être montée sur un élément d'armature de l'assise 1.

## Revendications

1. Siège pliant pour véhicule automobile, comprenant une assise (1) reliée à un plancher (2), un dossier (3) articulé au moyen d'une liaison pivot (31) située à la base du dossier (3) et permettant de rabattre ce dernier sur l'assise (1), le dossier (3) étant relié à l'assise (1) par des moyens de liaison (4 ; 5) conformés pour induire, lors du rabattement du dossier (1), un déplacement de l'assise (1) vers le bas et vers l'avant, **caractérisé en ce que** le siège comprend un châssis (6) d'assise fixé sur le plancher (2), ce châssis (6) comportant d'une part, une première portion (P1) sensiblement parallèle à l'assise (1), sur laquelle ladite assise (1) est articulée, et d'autre part, une seconde portion (P2) sensiblement perpendiculaire à la première portion (P1) et orientée vers le haut, de façon que le châssis (6) présente une forme générale en L, le dossier (3) étant articulé au moyen de la liaison pivot (31) sur une extrémité supérieure de la seconde portion (P2).

2. Siège pliant selon la revendication 1, **caractérisé en ce que** la seconde portion (P2) du châssis (6) a une longueur (LP2) au moins égale au quart de la longueur (LD) du dossier (3).

3. Siège pliant selon la revendication 1 ou 2, **caractérisé en ce que** la première portion (P1) du châssis (6) comporte au moins deux longerons (61 ; 62) sensiblement parallèles et situés de chaque côté du siège, chacun de ces longerons supportant l'assise au moyen d'au moins deux biellettes, dont une biellette avant (7) est reliée au châssis (6) par une articulation (72) et à l'assise (1) par une articulation (71) et dont une biellette arrière (5) est reliée au châssis (6) par une articulation (52) et à l'assise (1) par une articulation (51).

4. Siège pliant selon la revendication 3, **caractérisé en ce que** les moyens de liaison (4 ; 5) reliant le dossier (3) à l'assise (1) comportent, sur au moins un côté du siège, un levier (4) dont l'une des extrémités est reliée à la base du dossier (3) par une articulation (41) et une autre extrémité est reliée à la biellette arrière (5) par une articulation (42).

5. Siège pliant selon la revendication 4, **caractérisé en ce que** pour chaque côté du siège disposant d'un levier (4), l'articulation (52) de la biellette arrière (5) avec le châssis (6) est située entre d'une part, l'articulation (42) de la biellette arrière (5) avec le levier (4), et d'autre part, l'articulation (51) de la biellette arrière (5) avec l'assise (1).

6. Siège pliant selon la revendication 4 ou 5, **caractérisé en ce que** l'articulation (41) du levier (4) avec le dossier (3) est située sur une extrémité inférieure de la base du dossier (3), de sorte que cette articulation (41) est disposée à proximité et sensiblement en dessous de la liaison pivot (31) reliant le dossier (3) et le châssis (6), lorsque le dossier est en position relevée.

7. Siège pliant selon l'une quelconque des revendications précédentes, **caractérisé en ce que** l'assise (1) comporte deux barres (11 ; 12) sensiblement longitudinales, situées respectivement à proximité des deux longerons (61 ; 62) du châssis (6), de sorte que ces barres (11 ; 12) encadrent le chassis (6) lorsque l'assise (1) est en position basse.

8. Siège pliant selon la revendication 7, **caractérisé en ce qu'**au moins deux cales (13 ; 14) de maintien latéral sont montées pivotantes, selon la direction longitudinale du siège, respectivement sur chaque barre (11 ; 12) de l'assise (1), ces cales (13 ; 14) comportant chacune une palette (131 ; 141) coopérant en butée avec les longerons (61 ; 62) du châssis, de façon à amener les cales (13 ; 14) en position inactive sensiblement dans le plan de l'assise (1), lorsque cette assise est en position basse, et de façon à les rétablir en position active de façon sensiblement inclinée ou verticale, lorsque l'assise (1) est en position haute, sous l'action d'au moins un ressort interposé entre les cales (13 ; 14) et les barres (11 ; 12) correspondantes.

9. Siège pliant selon l'une quelconque des revendications précédentes, **caractérisé en ce que** le dossier (3) comporte un appui-tête (15) formant une liaison glissière avec le dossier (3) selon une direction sensiblement verticale lorsque le dossier est relevé, cet appui-tête (15) étant apte à se disposer automatiquement dans une position active déployée lorsque le dossier (3) est relevé, et dans une position inactive rétractée lorsque le dossier (3) est rabattu sur l'assise (1).

10. Siège pliant selon la revendication 9, **caractérisé en ce que** l'appui-tête (15) est relié à un tirant (16) monté mobile en translation sur le dossier (3), selon une direction sensiblement verticale lorsque le dossier est relevé, le tirant (16) coopérant avec une came (17) fixée sur le châssis (6) à proximité de la liaison pivot (31).

11. Siège pliant selon la revendication 10, **caractérisé en ce que** la came (17) est constituée d'une platine fixée sur le châssis (6) perpendiculairement à l'axe de la liaison pivot (31), laquelle platine comporte un trou oblong (171) ayant une forme générale courbée entourant partiellement la liaison pivot (31), de sorte que la distance entre le trou oblong (171) et la liaison pivot (31) varie progressivement d'une extrémité à l'autre de ce trou (171).

12. Siège selon la revendication 11, **caractérisé en ce que** le trou oblong (171) de la came (17) s'étend depuis le dessous de la liaison pivot (31) vers l'arrière de cette liaison pivot (31), de sorte que la distance séparant le trou oblong (171) de la liaison pivot (31) est la plus grande en dessous de la liaison pivot et la plus faible derrière la liaison pivot.

13. Siège pliant selon la revendication 11 ou 12, **caractérisé en ce que** le tirant (16) est pourvu à une extrémité inférieure, d'un doigt (161) orienté parallèlement à la liaison pivot (31), ce doigt (161) étant enfilé dans le trou oblong (171) de sorte qu'il peut se déplacer dans le trou oblong (171) et peut pivoter en rotation autour de son axe par rapport audit trou (171).

14. Siège selon l'une quelconque des revendications 10 à 13, **caractérisé en ce que** qu'un levier (18) est fixé sur le dossier (3) au moyen d'une liaison pivot (181) selon une direction perpendiculaire au plan du dossier (3), ce levier (18) étant relié à l'une de ses extrémités à l'appui-tête (15), et étant relié à une autre extrémité au tirant (16) par une biellette (19), la liaison pivot (181) étant située entre les deux extrémités du levier (18).

15. Siège pliant selon la revendication 14, **caractérisé en ce que** le levier (18) comporte à son extrémité reliée à l'appui-tête (15), un trou oblong (182) traversé par un doigt (151) solidaire de l'appui-tête (15), lequel trou oblong permet un mouvement de translation et/ou de rotation entre le levier (18) et le doigt (151).

16. Siège pliant selon la revendication 14 ou 15, **caractérisé en ce que** la biellette (19) est reliée au levier (18) par une articulation (191) et au tirant (16) par une articulation (192).

## Patentansprüche

1. Zusammenklappbarer Kraftfahrzeugsitz mit einer Sitzfläche (1), die mit einem Boden (2) verbunden ist, mit einer Rückenlehne (3), die mittels einer Drehverbindung (31) angelenkt ist, wobei die Drehverbindung an der Basis der Rückenlehne (3) angeordnet ist und es erlaubt, diese auf die Sitzfläche (1) herunterzuklappen, wobei die Rückenlehne (3) mit der Sitzfläche (1) durch Verbindungsmittel (4; 5) verbunden ist, die beim Herunterklappen der Rückenlehne (3) eine Bewegung der Sitzfläche (1) nach unten und nach vorne bewirken, **dadurch gekennzeichnet, dass** der Sitz ein Sitzflächengestell (6) aufweist, das am Boden (2) befestigt ist und zum einen einen ersten Abschnitt (P1) aufweist, der im Wesentlichen parallel zur Sitzfläche (1) verläuft und an dem die Sitzfläche (1) angelenkt ist, und zum anderen einen zweiten Abschnitt (P2), der im Wesentlichen senkrecht zum ersten Abschnitt (P1) verläuft und nach oben ausgerichtet ist, sodass das Gestell (6) die allgemeine Form eines L aufweist, wobei die Rückenlehne (3) mittels der Drehverbindung (31) am oberen Ende des zweiten Abschnitts (P2) angelenkt ist.

2. Zusammenklappbarer Sitz nach Anspruch 1, **dadurch gekennzeichnet, dass** der zweite Abschnitt (P2) des Gestells (6) eine Länge (LP2) besitzt, die mindestens einem Viertel der Länge (LD) der Rückenlehne (3) entspricht.

3. Zusammenklappbarer Sitz nach Anspruch 1 oder 2, **dadurch gekennzeichnet, dass** der erste Abschnitt (P1) des Gestells (6) mindestens zwei Längsträger (61; 62) aufweist, die im Wesentlichen parallel und auf jeder Seite des Sitzes angeordnet sind, wobei jeder der Längsträger die Sitzfläche mithilfe von mindestens zwei Schwingarmen trägt, von denen ein vorderer Schwingarm (7) mit dem Gestell (6) durch ein Gelenk (72) und mit der Sitzfläche (1) durch ein Gelenk (71) und ein hinterer Schwingarm (5) mit dem Gestell (6) durch ein Gelenk (52) und mit der Sitzfläche (1) durch ein Gelenk (51) verbunden ist.

4. Zusammenklappbarer Sitz nach Anspruch 3, **dadurch gekennzeichnet, dass** die Verbindungsmittel (4; 5), die die Rückenlehne (3) mit der Sitzfläche (1) verbinden, auf mindestens einer Seite des Sitzes einen Hebel (4) aufweisen, der an einem Ende durch ein Gelenk (41) mit der Basis der Rückenlehne (3) und am anderen Ende durch ein Gelenk (42) mit dem hinteren Schwingarm (5) verbunden ist.

5. Zusammenklappbarer Sitz nach Anspruch 4, **dadurch gekennzeichnet, dass** bei jeder Seite des Sitzes, die über einen Hebel (4) verfügt, das Gelenk (52), das den hinteren Schwingarm (5) mit dem Gestell (6) verbindet, zum einen zwischen dem Gelenk (42), das den hinteren Schwingarm (5) mit dem Hebel (4) verbindet, und zum anderen dem Gelenk (51) angeordnet ist, das den hinteren Schwingarm (5) mit der Sitzfläche (1) verbindet.

6. Zusammenklappbarer Sitz nach Anspruch 4 oder 5, **dadurch gekennzeichnet, dass** das Gelenk (41), das den Hebel (4) mit der Rückenlehne (3) verbindet, an einem unteren Ende der Basis der Rückenlehne (3) angeordnet ist, sodass sich dieses Gelenk (41) in der Nähe und im Wesentlichen unterhalb der Drehverbindung (31) befindet, welche die Rückenlehne (3) und das Gestell (6) verbindet, wenn die Rückenlehne hochgeklappt ist.

7. Zusammenklappbarer Sitz nach einem der vorhergehenden Ansprüche, **dadurch gekennzeichnet, dass** die Sitzfläche (1) zwei im Wesentlichen längs verlaufende Stangen (11; 12) aufweist, die jeweils in der Nähe der beiden Längsträger (61; 62) des Gestells angeordnet sind, sodass die Stangen (11; 12) das Gestell (6) einrahmen, wenn sich die Sitzfläche (1) in der unteren Position befindet.

8. Zusammenklappbarer Sitz nach Anspruch 7, **dadurch gekennzeichnet, dass** mindestens zwei Keile (13; 14) zum seitlichen Stützen in der Längsrichtung des Sitzes jeweils an jeder Stange (11; 12) der Sitzfläche (1) verschwenkbar montiert sind, wobei die Keile (13; 14) jeweils einen Flügel (131; 141) aufweisen, der in Anschlag mit den Längsträgern (61; 62) des Gestells zusammenwirkt, sodass die Keile (13; 14) in die im Wesentlichen in der Ebene der Sitzfläche (1) liegende inaktive Position geführt werden, wenn sich die Sitzfläche in der unteren Position befindet, und sie unter der Wirkung von mindestens einer Feder, die zwischen den Keilen (13; 14) und den entsprechenden Stangen (11; 12) angeordnet ist, wieder in die aktive, im Wesentlichen geneigte oder vertikale Position gebracht werden, wenn sich die Sitzfläche (1) in der oberen Position befindet.

9. Zusammenklappbarer Sitz nach einem der vorhergehenden Ansprüche, **dadurch gekennzeichnet, dass** die Rückenlehne (3) eine Kopfstütze (15) aufweist, die in einer im Wesentlichen vertikalen Richtung eine Gleitverbindung mit der Rückenlehne (3) bildet, wenn die Rückenlehne hochgeklappt ist, wobei die Kopfstütze (15) automatisch eine aktive ausgefahrene Position einnimmt, wenn die Rückenlehne (3) hochgeklappt ist, und eine inaktive, eingezogene Position, wenn die Rückenlehne (3) auf die Sitzfläche (1) heruntergeklappt ist.

10. Zusammenklappbarer Sitz nach Anspruch 9, **dadurch gekennzeichnet, dass** die Kopfstütze (15) mit einer Spannstange (16) verbunden ist, die in einer im Wesentlichen vertikalen Richtung translationsbeweglich an der Rückenlehne (3) montiert ist, wenn die Rückenlehne hochgeklappt ist, wobei die Spannstange (16) mit einer Nocke (17) zusammenwirkt, die in der Nähe der Drehverbindung (31) am Gestell (6) befestigt ist.

11. Zusammenklappbarer Sitz nach Anspruch 10, **dadurch gekennzeichnet, dass** die Nocke (17) aus eine Halteplatte besteht, die senkrecht zur Achse der Drehverbindung (31) am Gestell (6) befestigt ist und ein längliches Loch (171) aufweist, das im Allgemeinen gebogen ist und die Drehverbindung (31) teilweise umgibt, sodass der Abstand zwischen dem länglichen Loch (171) und der Drehverbindung (31) schrittweise von einem Ende zum anderen des Lochs (171) variiert.

12. Sitz nach Anspruch 11, **dadurch gekennzeichnet, dass** sich das längliche Loch (171) der Nocke (17) von der Unterseite der Drehverbindung (31) zur Hinterseite der Drehverbindung (31) erstreckt, sodass der Abstand zwischen dem länglichen Loch (171) und der Drehverbindung (31) unterhalb der Drehverbindung am größten und hinter der Drehverbindung am kleinsten ist.

13. Zusammenklappbarer Sitz nach Anspruch 11 oder 12, **dadurch gekennzeichnet, dass** die Spannstange (16) an einem unteren Ende mit einem Finger (161) versehen ist, der parallel zur Drehverbindung (31) ausgerichtet und in das längliche Loch (171) eingeführt ist, sodass er sich darin bewegen und gegenüber dem Loch (171) um seine Achse verschwenken kann.

14. Sitz nach einem der Ansprüche 10 bis 13, **dadurch gekennzeichnet, dass** ein Hebel (18) mittels einer Drehverbindung (181) entlang einer zur Ebene der Rückenlehne (3) senkrechten Richtung an der Rückenlehne (3) befestigt ist, wobei der Hebel (18) an einem Ende mit der Kopfstütze (15) und am anderen Ende über einen Schwingarm (19) mit der Spannstange (16) verbunden ist, wobei die Drehverbindung (181) zwischen den beiden Enden des Hebels (18) angeordnet ist.

15. Zusammenklappbarer Sitz nach Anspruch 14, **dadurch gekennzeichnet, dass** der Hebel (18) an seinem mit der Kopfstütze (15) verbundenen Ende ein längliches Loch (182) aufweist, das von einem Finger (151) durchlaufen wird, der mit der Kopfstütze (15) fest verbunden ist, wobei das längliche Loch eine Translations- und/oder Drehbewegung zwischen dem Hebel (18) und dem Finger (151) erlaubt.

16. Zusammenklappbarer Sitz nach Anspruch 14 oder 15, **dadurch gekennzeichnet, dass** der Schwingarm (19) durch ein Gelenk (191) mit dem Hebel (18) und durch ein Gelenk (192) mit der Spannstange (16) verbunden ist.

## Claims

1. Folding seat for a motor vehicle, comprising a seat base (1) connected to a floor (2), a seat back (3) articulated by means of a pivoting link (31) located at the base of the seat back (3) and making it possible to fold the latter over the seat base (1), the seat back (3) being connected to the seat base (1) by connection means (4; 5) shaped so as to cause the seat base (1) to be displaced downwards and forwards, during folding over of the seat back (1), **characterised in that** the seat comprises a seat base frame (6) fixed to the floor (2), this frame (6) comprising, on the one hand, a first portion (P1) substantially parallel to the seat base (1), to which said seat base (1) is articulated and, on the other hand, a second portion (P2) substantially perpendicular to the first portion (P1) and oriented upwards, so that the frame (6) is generally L-shaped, the seat back (3) being articulated by means of the pivoting link (31) to an upper end of the second portion (P2).

2. Folding seat according to Claim 1, **characterised in that** the second portion (P2) of the frame (6) has a length (LP2) at least equal to a quarter of the length (LD) of the seat back (3).

3. Folding seat according to Claim 1 or 2, **characterised in that** the first portion (P1) of the frame (6) comprises at least two substantially parallel side members (61; 62) located on each side of the seat, each of these side members supporting the seat base by means of at least two connection rods, the front connection rod (7) being connected to the frame (6) by an articulation (72) and to the seat base (1) by an articulation (71) and a rear connection rod (5) of which is connected to the frame (6) by an articulation (52) and to the seat base (1) by an articulation (51).

4. Folding seat according to Claim 3, **characterised in that** the connection means (4; 5) connecting the seat back (3) to the seat base (1) comprise, on at least one side of the seat, a lever (4), one of the ends of which is connected to the base of the seat back (3) by an articulation (41) and another end is connected to the rear connection rod (5) by an articulation (42).

5. Folding seat according to Claim 4, **characterised in that**, for each side of the seat that has a lever (4), the articulation (52) of the rear connection rod (5) with the frame (6) is located between, on the one hand, the articulation (42) of the rear connection rod (5) with the lever (4) and, on the other hand, the articulation (51) of the rear connection rod (5) with the seat base (1).

6. Folding seat according to Claim 4 or 5, **characterised in that** the articulation (41) of the lever (4) with the seat back (3) is located on a lower end of the base of the seat back (3), so that this articulation (41) is arranged in the proximity of and substantially below the pivoting link (31) connecting the seat back (3) and the frame (6), when the seat back is in the raised position.

7. Folding seat according to any one of the preceding claims, **characterised in that** the seat base (1) comprises two substantially longitudinal bars (11; 12), located respectively in the proximity of two side members (61; 62) of the frame (6), so that these bars (11; 12) surround the frame (6) when the seat base (1) is in the low position.

8. Folding seat according to Claim 7, **characterised in that** at least two lateral holding blocks (13; 14) are mounted so as to pivot, in the longitudinal direction of the seat, respectively on each bar (11; 12) of the seat base (1), these blocks (13; 14) each comprising a blade (131; 141) co-operating with and abutting against the side members (61; 62) of the frame, so as to bring the blocks (13; 14) into an inactive position substantially in the plane of the seat base (1), when this seat base is in the low position, and so as to return them to the active position in a substantially inclined or vertical manner, when the seat base (1) is in the high position, under the action of at least one spring interposed between the blocks (13; 14) and the corresponding bars (11; 12).

9. Folding seat according to any one of the preceding claims, **characterised in that** the seat back (3) comprises a head-rest (15) forming a sliding link with the seat back (3) in a substantially vertical direction when the seat back is raised, this head-rest (15) being capable of being automatically arranged in a deployed active position when the seat back (3) is raised, and in a retracted inactive position when the seat back (3) is folded over the seat base (1).

10. Folding seat according to Claim 9, **characterised in that** the head-rest (15) is connected to a tie rod (16) mounted so as to be mobile in translation over the seat back (3), in a substantially vertical direction when the seat back is raised, the tie rod (16) co-operating with a cam (17) fixed to the frame (6) in the proximity of the pivoting link (31).

11. Folding seat according to Claim 10, **characterised in that** the cam (17) is constituted by a plate fixed to the frame (6) perpendicular to the axis of the pivoting link (31), which plate comprises an oblong hole (171) having a generally curved shape partly surrounding the pivoting link (31), so that the distance between the oblong hole (171) and the pivoting link (31) varies progressively from one end of this hole (171) to the other.

12. Seat according to Claim 11, **characterised in that** the oblong hole (171) of the cam (17) extends from the bottom of the pivoting link (31) to the back of this pivoting link (31), so that the distance separating the oblong hole (171) from the pivoting link (31) is greatest below the pivoting link and least behind the pivoting link.

13. Folding seat according to Claim 11 or 12, **characterised in that** the tie rod (16) is provided at a lower end with a finger (161) oriented parallel to the pivoting link (31), this finger (161) being inserted into the oblong hole (171) so that it can be displaced within the oblong hole (171) and can pivot in rotation about its axis with respect to said hole (171).

14. Seat according to any one of Claims 10 to 13, **characterised in that** that a lever (18) is fixed to the seat back (3) by means of a pivoting link (181) in a direction perpendicular to the plane of the seat back (3), this lever (18) being connected at one of its ends to the head-rest (15) and being connected at another end to the tie rod (16) by a connection rod (19), the pivoting link (181) being located between the two ends of the lever (18).

15. Folding seat according to Claim 14, **characterised in that** the lever (18) comprises, at its end connected to the head-rest (15), an oblong hole (182) through which a finger (151) integral with the head-rest (15) passes, which oblong hole allows rotational and/or translational movement between the lever (18) and the finger (151).

16. Folding seat according to Claim 14 or 15, **characterised in that** the connection rod (19) is connected to the lever (18) by an articulation (191) and to the tie rod (16) by an articulation (192).
